(19) Europäisches Patentamt
European Patent Office
Office européen des brevets

(11) EP 3 105 811 B1

(12) **EUROPEAN PATENT SPECIFICATION**

(45) Date of publication and mention of the grant of the patent:
**31.01.2018 Bulletin 2018/05**

(21) Application number: **15704704.4**

(22) Date of filing: **11.02.2015**

(51) Int Cl.:
***H01G 9/20*** *(2006.01)* ***H01M 14/00*** *(2006.01)*
***H01M 8/18*** *(2006.01)* ***H01M 8/20*** *(2006.01)*

(86) International application number:
**PCT/DK2015/050029**

(87) International publication number:
**WO 2015/120858 (20.08.2015 Gazette 2015/33)**

(54) **A SOLAR RECHARGEABLE REDOX FLOW CELL**

SOLARE WIEDERAUFLADBARE REDOX-DURCHFLUSSZELLE

CELLULE À FLUX REDOX RECHARGEABLE À ÉNERGIE SOLAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2014 EP 14154865**

(43) Date of publication of application:
**21.12.2016 Bulletin 2016/51**

(73) Proprietors:
- **Aarhus Universitet**
  **8000 Aarhus C (DK)**
- **University of Porto**
  **4099-002 Porto (PT)**

(72) Inventors:
- **BENTIEN, Anders**
  **8541 Skødstrup (DK)**
- **MENDES, Adélio Miguel Magalhães**
  **4100-467 Porto (PT)**
- **SILVA, Luísa Andrade**
  **4445-488 Ermesinde (PT)**

(74) Representative: **Plougmann Vingtoft a/s**
**Rued Langgaards Vej 8**
**2300 Copenhagen S (DK)**

(56) References cited:
**EP-A1- 1 494 246**
**EP-A1- 2 339 682**
**CN-A- 101 043 077**
**CN-A- 103 000 924**
**CN-U- 202 888 909**
**JP-A- 2006 254 682**
**JP-A- 2008 266 744**
**US-A1- 2013 224 538**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 105 811 B1

**Description**

FIELD OF THE INVENTION

The present invention relates to a solar rechargeable redox flow cell, a method for storing solar energy by chemicals conversion through the solar rechargeable redox flow cell, an electrochemical system comprising the solar rechargeable redox flow cell and a method of operating the electrochemical system.

BACKGROUND OF THE INVENTION

EU and worldwide goals of reducing and phasing out the use of fossil fuels in the coming decades are to a large extent based on expectations of replacement of these fuels with renewable wind and solar-based energy sources. Currently the primary energy sources in the EU are 80 % fossil fuels, 15 % nuclear power and only 5 % renewables and the transition is faced with large challenges concerning both new energy conversion technologies and the adaption into the existing energy distribution and storage infrastructure. Solutions are most likely to be based on continuous introduction of i) new renewable energy conversion technologies for the power grid and transportation, ii) increased efficiencies in power consumption and in the use of resources (recycling) and iii) an intelligent power grid where consumption is driven by the available supply.

In this context it is noted that approximately one third of fossil fuels are converted into electricity and transported to consumers/industry through the electrical power grid, the last two thirds are used for transportation and heating.

The two most significant challenges in a future electrical power grid that is based on renewable wind and solar based energy sources are; i) further development of technologies that can convert solar or wind energy into electricity at reasonably costs, in terms of price per kWh, (ii) development of storage capacities to store surplus wind and solar electricity. For the EU, the storage capacity has been estimated to be at least 10 % of the total power consumption in the EU per year, in order to handle the varying wind and solar electricity generation.

Electricity can be stored electrochemically in standard batteries. However, storage costs are many times larger than the raw electricity price. Thus there is a need of a less expensive solution to large-scale electricity storage than the one of standard battery technology.

A less investigated type of batteries called redox flow batteries has the potential to become a future technology for large-scale energy storage.

A redox flow battery cell is made of two electrodes and ion exchange membrane in an arrangement where the two electrodes are separated by the ion exchange membrane. During the charging step an anolyte stream is supplied to the anode and a catholyte is supplied to the cathode. During the charging step, a redox reaction is thus conducted driving by electrical power while during the discharging step electrical power is generated; in both cases ions are exchanged through the membrane and the electrolyte is recirculated during the process. The advantage of these devices is that the size of the battery is independent of amount of energy stored, which only depends on the volume of electrolyte used. The cyclic (charge/discharge) efficiency of these cells is normally high (60-90 %), but much dependent on the current density on the surface of the electrodes and membrane during both charging and discharging and on the choice of redox couples. One of the attractive features of redox flow batteries is the easy scalability between storage capacity and power. Moreover, since the storage tank and power generation are two separate units, capital costs are considerably lower than that of Li-ion batteries, and comparable to the raw electricity costs. Furthermore, the capital costs can be lower than e.g. undersea high voltage power cables.

Still to date, recharging of redox flow battery requires electricity from the electrical power grid at high cost.

Hence, an improved redox flow cell that could be easily and rapidly recharged at low cost would be advantageous, and in particular a more efficient and/or reliable method to recharge redox flow cell would be advantageous.

OBJECT OF THE INVENTION

It is an object of the invention to provide a redox flow cell that can be easily and rapidly recharged at low cost.

It can be seen as an object of the invention to provide an efficient method to store solar energy.

It can be also seen as an object of the invention to provide an efficient method to operate, i.e. charge and discharge a redox flow cell.

It is a further object of the present invention to provide an alternative to the prior art.

In particular, it may be seen as an object of the present invention to provide a redox flow cell that solves the above-mentioned problems of the prior art by providing a solar rechargeable redox flow cell.

SUMMARY OF THE INVENTION

Thus, the above described object and several other objects are intended to be obtained in a first aspect of the invention by providing a solar rechargeable redox flow cell comprising: a photoelectrode; a counter electrode, wherein the counter electrode is electrically connected to the photoelectrode; an ion exchange membrane located between the photoelectrode and the counter electrode, thereby separating the solar rechargeable redox flow cell at least into two chambers, a photoelectrode or negative chamber and a counter electrode or positive chamber separated by the ion exchange membrane; an electrolyte comprising a first redox couple having a first reduction potential and a second redox couple having a second oxidation potential; wherein the photoelectrode has a conduction band potential lower than the first reduction potential, thereby towards negative voltage; and wherein the photoelectrode has a valence band potential higher than the second oxidation potential, thereby towards positive voltage.

A redox flow battery may be formed by one or more redox flow cell. Thus, wherein referred to as "cell" within this disclosure it may be also referred to as battery.

A key advantage of the redox flow cell of the invention is that it can be recharged by solar irradiation, i.e. the redox couples involved are photo-electrochemically charged by light irradiation into an oxidation state that can be stored and later converted into electricity.

This is achieved in a compact single unit through the use of at least one photoelectrode, e.g. comprising a n-type semiconductor, as one of the electrode involved.

The key components are the photoelectrode, the counter electrode both surrounded by an electrolyte, an ion conductive membrane and a first and a second redox couple contained in the electrolyte. The electrolyte may be a liquid or a solid electrolyte. The ion exchange membrane is adapted to separate the photoelectrode or negative chamber and the counter electrode or positive chamber.

Reduction potential, is a measure of the tendency of a chemical species to acquire electrons and thereby be reduced. Reduction potential is measured in volts (V), or millivolts (mV). Each species has its own intrinsic reduction potential; the more positive the potential, the greater the species' affinity for electrons and tendency to be reduced.

The energy level referred herein includes the overpotentials of the oxidation (UOV) and reduction (UOC) reactions. The overpotential is the deviation of the potential of an electrode from its equilibrium value required to cause a given current to flow through the electrode. It is generally assumed that the overpotential is in the area of 0.2 V.

The solar rechargeable redox flow cell of the invention employs a photoelectrode having specific characteristics.

As the photoelectrode has a valence band potential higher than the second oxidation potential, i.e. the redox potential of the second redox couple, upon light irradiation an oxidation reaction will occur at the photoelectrode.

As the photoelectrode has a conduction band potential lower than the first reduction potential, i.e. the redox potential of the first redox couple, a reduction reaction occurs at the counter electrode or positive side.

In some embodiments, the photoelectrode is a photoanode.

In some embodiments, the first redox couple is contained in the counter electrode or positive chamber and wherein the second redox couple is contained in the photoelectrode or negative chamber.

Thus, the two redox couples are separated by an ion conductive membrane. The ionic conductive membrane avoids the mixing of the two redox couple.

In some embodiments, the photoanode is or comprises a semiconductor.

A semiconductor is characterized by its band gap and the potential of the band edges. The band edges of the photoanode fit the electrode reactions potential including the overpotentials. Preferably, the photoanode is stable at the operating conditions, e.g. comprises chemically stable materials, and has a low cost.

In some embodiments, the first redox couple is $S_4^{2-}/S_2^{2-}$ and wherein the second redox couple is $Br^-/Br_3^-$.

In some embodiments, the electrolyte comprises a polysulfide bromide redox couple.

In some other embodiments, the first redox couple is $I^-/I_3^-$, and the second redox couple is DHAQDS/DHAQDSH$_2$, i.e.1,8-dihydroxy-9,10-anthraquinone-2,7-disulphonic acid.

In some further embodiments, the first redox couple is $VO^{2+}/V^{3+}$, and the second redox couple is $V^{3+}/V^{2+}$.

In some embodiments, the photoanode comprises iron (III) oxide, e.g. hematite.

The semiconductors comprised in the photoelectrode or photoanode, such as Iron (III) oxide/ $Fe_2O_3$ e.g. hematite, have a band gap that matches redox couples, such as $Br^-/Br_3^-$ and $S_4^{2-}/S_2^{2-}$, redox potential. For example, depending on the pH level the position of the valence and conduction band of the mentioned redox couples are approximately -6.2 eV and -4.0 eV related to the vacuum level energy, respectively, compared to -5.7 eV of $Br^-/Br_3^-$ and -4.3 eV of $S_4^{2-}/S_2^{2-}$, respectively.

Hematite has the advantage of being a very stable and cheap photocatalyst for pH values above 5 with suitable band edges positions.

Furthermore, hematite can be supported on a transparent double face glass substrate coated with a transparent conducting oxide (TCO) layer.

In some embodiments, the photoelectrode or photoanode comprises hematite and the first redox couple is $S_4^{2-}$

$/S_2^{2-}$ and the second redox couple is $Br^-/Br_3^-$.
In some other embodiments, the photoelectrode or photoanode comprises hematite and the first redox couple is $I^-/I_3^-$, and the second redox couple is DHAQDS/$DHAQDSH_2$.

In some embodiments, the photoelectrode or photoanode comprises CdS.
In some further embodiments, the photoelectrode or photoanode comprises CdSe. The photoelectrode may comprise CdS and CdSe.
In some embodiments, the photoelectrode or photoanode comprises CdS and Cd Se and the first redox couple is $VO^{2+}/V^{3+}$, and the second redox couple is $V^{3+}/V^{2+}$.

Other examples of photoelectrodes are electrodes comprising other metal oxide, such as tungsten oxide, i.e. $WO_3$.

Photoelectrodes may also have different morphology. For example, photoelectrode may be thin layers of oxides deposited on a surface. In some other embodiments photoelectrodes may be semiconductors applied over a three dimensional structure. For example, photoelectrodes may be formed by a coating of $Fe_2O_3$, e.g. applied via atomic layer deposition (ALD), on porous glasses coated with fluorine doped tin oxide (FTO).
In some embodiments, the electrolyte comprises a first salt solution comprising said first redox couple in the counter electrode or positive chamber and wherein the liquid electrolyte comprises a second salt solution comprising the second redox couple in the photoelectrode or negative chamber.

Example of redox couples that can be used as first or second redox couples are inorganic redox couples such as $Br^-/Br_3^-$, $Fe^{3+}/Fe^{2+}$, or organic redox couples, such as AQDS/$AQDSH_2$ (9,10-anthraquinone-2,6-disulphonic acid), DHAQDS (1,8-dihydroxy-9,10-anthraquinone-2,7-disulphonic acid), Acid Blue 45 (4,8-Diamino-1,5-dihydroxyanthraquinone-2,6-disulfonic acid), Indigotetrasulfonate (5,5',7,7'-Indigotetrasulfonic acid), Methylene blue (3,7-bis(Dimethylamino)phenazathionium).
Example of other redox couples that can be used as second redox couples are halogens redox couple, such as $I^-/I_3^-$, $Cl^-/Cl_3^-$, $F^-/F_3^-$, ($OCl^-/Cl^-/OH^-$).

In some embodiments, the ion-exchange membrane is a cation exchange membrane.
The cation exchange membrane allows for cations, e.g. sodium ions, to cross the membrane, but prevents anions to cross the membrane and thus to mix with each other.
The cation exchange membrane may be a perfluorinated cation exchange membrane. For example, the ion-exchange membrane may be Nafion.

In some other embodiments, involving different type of photoelectrodes and redox couples the ion-exchange membrane may be an anion exchange membrane.

In some other embodiments the counter electrode is or comprises a second photoelectrode.
In some further embodiments, the photoelectrode is a photocathode.

In some other embodiments, the photocathode comprises transition metal oxide or sulphide. For example, the photocathode may comprise $Cu_2S$.
Thus, in some embodiments, the counter electrode comprises $Cu_2S$.
$Cu_2S$ has the advantage of being resistant towards strong polysulfide solutions. $Cu_2S$ is a semiconductor having a small band gap, with $E_g \sim 1.0\text{-}1.3$ eV.
Band edges relative to $Cu_2S$ have approximate values of -3.8 eV and -5.0 eV related to the vacuum level.
In some embodiments, since $Cu_2S$ has a significantly smaller band gap than $Fe_2O_3$ and that the conduction/valence band are at higher energy levels, it is possible to charge the cell through a *tandem* photo-electrode operation. Low energy photons transmitted through the $Fe_2O_3$ photo-electrode are absorbed in the $Cu_2S$ photo-electrode and improve the reduction reaction. Many ion conducting membranes e.g. Nafion are almost completely transparent in the VIS/IR spectrum and that can be used so as to allow low energy photons to reach the $Cu_2S$ photo-electrode.

In some embodiments, the counter electrode is or comprises nano-structured/porous $Cu_2S$ electrodes that have been prepared on FTO substrates by simple electroplating technique or on Cu substrates by a combination of etching and reaction with polysulfide solutions. Alternatively, counter electrodes may be prepared by using thermal decomposition of Cu(I) thiourea complexes to be spun or spray coated producing $Cu_{2-x}S$ layers, as well as by coating of monodisperse $Cu_{2-x}S$ nanoparticles.
In some embodiments, the counter electrode comprises carbon.
In some other embodiments, the counter electrode is or comprises carbon felt, carbon paper or graphite felt.
In some further embodiments, the photoanode comprises a co-catalyst.
In some other embodiments, the counter electrode comprises a co-catalyst.
For example, the photoanode or counter electrode may be coated with the catalyst.
Examples of catalysts or electrocatalysts that can be used are based on transition metals, such as Pt, Pd and have a high surface area, e.g. can be in the form of nanoparticles.
One of the great advantages of the redox flow cell of the invention is that it can convert solar energy and store it electrochemically in one unit.

Thus in a second aspect the invention relates to a method for storing solar energy by chemicals conversion through a solar rechargeable redox flow cell according to the first aspect of the invention. The method comprises: light irradiating the photoanode in contact with a solution of sodium bromide, thereby producing a charge separation causing oxidation of bromide to tribromide; reducing a solution of sodium tetrasulphide in contact with the counter electrode, thereby causing reduction of tetrasulphide to disulphide.
Thus, in a third aspect the invention provide a system for storing solar energy comprising the solar rechargeable redox flow cell according to the first aspect of the invention.
In a fourth aspect the invention related to an electrochemical system comprising a solar rechargeable redox flow cell according to the first aspect of the invention.
The electrochemical system may further comprise a third electrode.
The third electrode may be electrically connected to the counter electrode.
In some embodiments, the third electrode is located within the photoelectrode or negative chamber.
In some embodiments, the solar rechargeable redox flow cell comprises the third electrode.
In some further embodiments, the third electrode is located in another redox flow cell unit.
The third electrode may have the function of a cathode or negative electrode, i.e. may be a cathode.
In some other embodiments the third electrode may have the function an anode, i.e. may be an anode.
In some embodiments the third electrode may comprise graphite.
In some embodiments, the electrochemical system may further comprise a fourth electrode.
The fourth electrode may be located within the counter electrode or positive chamber.
In some embodiments, the solar rechargeable redox flow cell comprises the fourth electrode.
In some further embodiments, the fourth electrode is located in another redox flow cell unit.
The fourth electrode may have the function of an anode or positive electrode, i.e. may be an anode, in one of the operational mode of the electrochemical system, e.g. the discharging mode.
In some embodiments, third and fourth electrode may be located in another redox flow cell unit comprised in the electrochemical system.
In general catalysts may be added to any of the four electrodes to reduce the overpotentials. One of the advantages of the use of a co-catalyst is the reduction of the overpotentials.
In a fifth aspect the invention relates to a method of operating an electrochemical system according to the fourth aspect of the invention, the method comprising: charging the solar rechargeable redox flow cell; and discharging the solar rechargeable redox flow cell, thereby producing electricity.
In some embodiments, the charging comprises: light irradiating the photoelectrode in contact with a first solution, such as a solution of sodium bromide, thereby producing a charge separation causing oxidation of bromide to tribromide; and reducing a second solution, such as a solution of sodium tetrasulphide in contact with the counter electrode, thereby causing reduction of tetrasulphide to disulphide.
The reactions involved in the charging step are:

- Cell charging

  ◦ Reaction at the photoanode (negative electrode)

$$3Br^{-} + 2h^{+} \rightarrow Br_3^{-},\ E° = -1.09\ V \qquad (1)$$

  ◦ Reaction at the counter-electrode (positive electrode)

$$S_4^{2-} + 2e^{-} \rightarrow 2S_2^{2-},\ E° = -0.265\ V \qquad (2)$$

- Global, charging mode

$$3NaBr + Na_2S_4 \rightarrow NaBr_3 + 2Na_2S_2,\ E° = -1.36\ V \qquad (3)$$

In some embodiments, the charging further comprises storing the solutions, i.e. the first and the second solution.
For example, the charged solutions may be stored in external tanks.
In some other embodiments, of the method according to the fifth aspect the discharging comprises: switching off the electrical connection between the photoelectrode and the counter electrode; switching on an electrical connection

between an anode and a cathode submerged in the solutions, thereby producing electricity.
By discharging the solar rechargeable redox flow cell electricity is produced.
The reactions involved in the discharging step are the one of a standard redox flow cell.

The reactions involved in the discharging step are:

- Cell mode (discharging)

  ◦ Reaction at the negative electrode

$$Br_3^- + 2e^- \rightarrow 3Br^-,\ E° = +1.09\ \text{V} \qquad (4)$$

  ◦ Reaction at the positive electrode

$$2S_2^{2-} \rightarrow S_4^{2-} + 2e^-,\ E° = +0.265\ \text{V} \qquad (5)$$

- Global, discharging mode

$$NaBr_3 + 2Na_2S_2 \rightarrow 3NaBr + Na_2S_4,\ E° = +1.36\ \text{V} \qquad (6)$$

In some further embodiments, of the method according to the fifth aspect, the third electrode is the cathode or negative electrode.
In some further embodiments, of the method according to the fifth aspect, the fourth electrode is the anode or positive electrode.
In some further embodiments, of the method according to the fifth aspect the anode and the cathode are submerged in the counter electrode or positive chamber and the photoelectrode or negative chamber respectively.

In some further embodiments, of the method according to the fifth aspect, the method further comprises moving the solutions into a redox flow cell comprising the anode and the cathode after switching off the electrical connection between the photoelectrode and the counter electrode and before switching on an electrical connection between the anode and the cathode.

This step of switching off the electrical connection between said photoelectrode and said counter electrode is optional. Electricity may be withdrawn from the battery while the photoelectrode is still on. The discharging of the battery is not compromised by keeping the photoelectrode on. On the contrary this arrangement will have the advantage of keeping charging the battery.

Part of the harvested sunlight may be converted into electrochemical energy and part in heat. This heat could be exchanged with sanitary waters making the overall efficiency of the solar rechargeable redox flow cell even higher.

Thus, in some embodiments an electrochemical system comprising the solar rechargeable redox flow cell comprises a system adapted to exchange heat between the cell and sanitary water.

For example, the electrochemical system may comprise two units: a solar rechargeable flow cell according to the first aspect of the invention and a flow cell unit. Both units may have the function of chargeable or dischargeable unit. For example, the solar rechargeable flow cell according to the first aspect of the invention may have a rechargeable function by converting the anolyte and catholyte solution upon light irradiation. However, the solar rechargeable flow cell according to the first aspect of the invention may have a dischargeable function by producing electricity when a stream of anolyte and catholyte solutions are flown into the unit.
The other flow cell unit may also operate as chargeable unit, when fed with electricity or as dischargeable unit when a stream of anolyte and catholyte solutions are flown into the unit thus producing electricity.
When anolyte and catholyte are flown from the storage tanks towards and to the solar rechargeable flow cell according to the first aspect of the invention for photocharging, the temperature of the anolyte and catholyte solutions increases due to sun irradiation.
In order to take advantage of this raise of temperature of the catholyte and anolyte solution, the electrolyte storage tanks can be equipped with a heat exchanging system that exchanges heat for sanitary water use.

The overall energy efficiency of the solar rechargeable redox flow cell when considering the electrochemical and thermal energy production is very high and close to 80 %.

The first, second and third and other aspects and embodiments of the present invention may each be combined with any of the other aspects and embodiments. These and other aspects and embodiments of the invention will be

apparent from and elucidated with reference to the embodiments described hereinafter.

BRIEF DESCRIPTION OF THE FIGURES

The solar rechargeable redox flow cell according to some embodiments of the invention will now be described in more detail with regard to the accompanying figures. The figures show one way of implementing the present invention and is not to be construed as being limiting to other possible embodiments falling within the scope of the attached claim set.

Figure 1 is a graphic representation of the principle of a redox flow cell (prior art).
Figure 2a and figure 2b are a graphic representation of solar rechargeable redox flow cell according to some embodiments of the invention.
Figure 3 is a graphic representation of solar rechargeable redox flow cell according to some embodiments of the invention where both electrodes are photoelectrodes.
Figure 4-7 are example of the configurations of the solar rechargeable redox flow cell.
Figure 8 is a flow-chart of a method according to some embodiments of the invention.
Figure 9 is a graphic representation of the Vanadium redox couples energy levels and the CdS and CdSe band gaps.
Figure 10a shows the current-voltage (IV curve) characteristic of a CdS/CdSe photoanode while charging a vanadium redox flow battery.
Figure 10b shows the stability of the semiconductor by presenting the current characteristics vs time of the CdS/CdSe photoanode.
Figure 11a shows IV curves of the CdS/CdSe photoanode at different states-of-charge.
Figure 11b shows the correlation between the onset and the Nernst equilibrium potential.
Figure 12a are an absorption spectra of anolyte at different stages of charge.
Figure 12b shows the current and charge characteristics vs time thus evidencing photocorrosion of CdS/CdSe photoanode compared to photo response in vanadium containing electrolyte.
Figure 13a is a schematic representation of solar charged redox flow battery employing an organic redox couple electrolyte.
Figure 13b is a schematic representation showing the energy levels of the redox couples of the solar charged redox flow battery of figure 13a.
Figure 14a and figure 14b shows the photoelectrochemical performance of a hematite photoanode while charging an organic redox flow battery, i.e. a flow battery comprising an organic redox couple electrolyte.
Figure 14a is an IV curve showing the photoelectrochemical performance of a hematite photoanode while charging an organic redox flow battery with current-voltage characteristic of 0.2 $mA/cm^2$ at 0.7 V bias.
Figure 14b shows the current characteristics vs time of the organic redox flow battery with a hematite photoanode evidencing the stability of the semiconductor at 0.7 V bias.

DETAILED DESCRIPTION OF AN EMBODIMENT

Figure 1 is a schematic outline of the principle in a redox flow cell.
In figure 1 a Polysulfide Bromide battery (PSB) is shown. A PBS is a type of regenerative fuel cell involving a reversible electrochemical reaction between two salt-solution electrolytes: sodium bromide and sodium polysulfide. In the PBS the redox couples are NaBr/NaBr3 (bromine) and Na2S4/Na2S2 (polysulfide).
The two different salt solution electrolytes are contained in two separate tanks. When there is a need of electrical energy, the two solutions are pumped into a reaction chamber. The reaction chamber is separated into a cathode or negative chamber and into an anode or positive chamber by an ion exchange membrane. Thus a solution of $NaBr_3$ is pumped to the negative chamber and a solution of $Na_2S_2$ is pumped to the positive chamber. The cathode and anode, and their corresponding salt solutions, are separated by an ion exchange membrane.
At the cathode in the negative chamber, the following a cathodic reaction occurs:

$$Br_3^- + 2e^- \rightarrow 3Br^-,\ E° = +1.09\ \text{V} \qquad (4)$$

At the anode in the positive chamber, the following an anodic reaction occurs:

$$2S_2^{2-} \rightarrow S_4^{2-} + 2e^-,\ E° = +0.265\ \text{V} \qquad (5)$$

Thus the global reaction will be:

$$NaBr_3 + 2Na_2S_2 \rightarrow 3NaBr + Na_2S_4,\ E° = +1.36\ V \qquad (6)$$

During this process, $Na^+$ is exchanged through the ion conductive membrane, while electrons are passed through an external circuit generating electrical power. As electrical energy is produced, the sodium sulphide becomes sodium polysulphide, and the sodium tribromide becomes sodium bromide and the cell is discharged.
This reaction can be reversed when an electrical current with enough potential is supplied to the electrodes, and the system chemical salts are recharged. The system may be referred as a fuel cell because the electrodes are not consumed by the reaction; they act only as a surface for the reaction. However, no fuel is consumed and the process consists of charging and discharging a salt solution electrolyte.
PSB shows that energy can be stored electrochemically by changing the oxidation states of bromine and polysulfide.

Figure 2a shows a graphical representation of the working principle of photoelectrochemical charging of redox couples according to some embodiments of the invention. The key components are the photo-electrode, counter electrode and ion conductive membrane. The n-type semiconductor at the photo-electrode is exposed to solar radiation whereby an electron is excited from the valence band to the conduction band. The holes formed move to the surface of the semiconductor and promote the oxidation of NaBr to $NaBr_3$; at the same time 2 $Na^+$ are exchanged through the ion conductive membrane. The electrons produced are collected through the external circuit and reach the counter electrode. In the counter electrode or positive chamber $Na_2S_4$ is reduced to $Na_2S_2$ through following the opposite reaction as indicated in (1), i.e. $Na_2S_4 + 2Na^+ + 2e^-$ reacts to produce 2Na2S2.
During operation there is a continuous flow of the uncharged electrolytes NaBr and $Na_2S_4$ into the cell, which exit the cell in a partial or total charged state i.e. $NaBr_3$ and $Na_2S_2$. The charged solutions can be stored and later converted into electricity in the same unit functioning as a redox flow cell or in a further redox flow cell.
In figure 2b the same graphical representation is shown with the corresponding energy levels in the photo/counter-electrode and the redox couples solutions.

The photoelectrode is chosen so that the energy levels match, i.e. the energy levels of the redox couples must be in between that of the valence and conduction band energy levels so as to produce a photocurrent.
The energy levels referred therein are defined as including the overpotentials of the oxidation (UOV) and reduction (UOC) reactions.
The efficiency ($\eta c$) is defined as the ratio between the (theoretical) chemical energy stored in the redox couples and the incident solar energy $\eta c = j \cdot UR/Prad$, where the j is the photo current density in the cell, UR is the redox potential of the redox couple and Prad is the radiation power per unit area.
In order to increase the efficiency the choice of material is so that the oxidation potential, including the overpotential is close to the valence band edge and the reduction potential, including the overpotential is close to the conduction band edge.
In other embodiments, band gap optimization of photo-electrode/s may be foreseen. Optimizations in the design of the solar rechargeable redox flow cell towards maximization of the sunlight absorption may be also foreseen.

As mentioned earlier part of the harvested sunlight may be converted into electrochemical energy and part in heat. This heat could be exchanged with sanitary waters making the overall efficiency of the solar rechargeable redox flow cell even higher. Thus in some embodiments an electrochemical system comprising the solar rechargeable redox flow cell comprises a system adapted to exchange heat between the cell and sanitary water. Furthermore, in buildings the solar rechargeable redox flow cell may be installed on the roof for optimal light irradiation. However, this will produce overheating of the electrolyte. The heated electrolyte can be used for heating sanitary water with the advantage of reducing the electrolyte temperature, thus avoiding degradation and at the same time providing a source of heated water.

Figure 3 is a graphic representation of solar rechargeable redox flow cell according to some embodiments of the invention where both electrodes are photoelectrodes.

Figure 4-7 are example of the configurations of the solar rechargeable redox flow cell.

Figure 4 shows a graphic representation of solar rechargeable redox flow cell 5 comprising a photoanode 1 in a photoelectrode or negative chamber 6, a counter electrode 2 in a counter electrode or positive chamber 7, wherein counter electrode 2 and photoanode 1 are connected through an external circuit 4. Figure 4 shows also an ion exchange membrane 3 located between the photoanode 1 and the counter electrode 2.

Figure 5 shows a graphic representation of solar rechargeable redox flow cell 8 comprising a photoanode 11 in a photoelectrode or negative chamber 9, a counter electrode 12 in a counter electrode or positive chamber 10, wherein counter electrode 12 and photoanode 11 are connected through an external circuit 16. The two chambers are separated by an ion exchange membrane 14 located between the photoanode 11 and the counter electrode 12. Figure 5 shows also a cathode 13 that can be connected to the counter electrode 12 through switch 15. This embodiment may be useful

if the photoanode used has neither the required electric conductivity nor the electrochemical activity to serve as cathode. In this embodiment during the charging step the photoanode 11 and counter electrode 12 are electrically connected through external circuit 16, where the switch 15 is positioned so as to allow electrons produced at the photoanode to move towards and to the counter electrode 12. Following the charging, the cell can be discharged by switching off the connection between photoanode 11 and counter electrode 12 and by switching on the connection between cathode 13 and the electrode 12, having during discharge the function of an anode.
The cathode 13 may be coated with a relevant co-catalyst.
A further advantage of this embodiment is that it allows the use of photoanode having low electrical conductivity and high overpotential as the discharging step is carried out through the use of a different electrode than the photoanode as cathode.

Figure 6 shows a graphic representation of an electrochemical system comprising solar rechargeable redox flow cell 17 comprising a photoanode 18 in a photoelectrode or negative chamber 19, a counter electrode or positive 20 in a counter electrode chamber 21, wherein counter electrode 20 and photoanode 18 are connected through an external circuit 22. Figure 6 shows also an ion exchange membrane 23 located between the photoanode 18 and the counter electrode 20.

Figure 6 shows also a cathode 24 located in the photoelectrode or negative chamber 19 and an anode 25 located in the counter electrode or positive chamber 21.
Thus during the charging step charged electrolyte is produced by employing the circuit photoanode 18, external circuit 22 and counter electrode 20. During the discharging step, the circuit is switched and the cell is discharged by employing cathode 24, external circuit 26 and anode 25 to produce electricity.
The solar rechargeable redox flow cell 17 may also comprise one or more outlet (not shown) and/or one or more inlet (not shown) for the electrolyte solution comprising redox couples according to some embodiments of the invention. Inlets/outlets allow for the flow of discharged/charged electrolyte in/out the cell so as to insure a continuous operation.

Figure 7 shows a graphic representation of an electrochemical system comprising solar rechargeable redox flow cell 27 and a redox flow cell unit 28. Photoanode 29 and counter electrode 30 are located respectively in a photo-electrode or negative chamber 31 and in a counter electrode or positive chamber 32 separated by an ion-exchange membrane 33. Fluid connections 34 and 35 are present allowing flow of electrolyte comprising the redox couples according to the invention between the solar rechargeable redox flow cell 27 and the redox flow cell unit 28. In this case, recharging of the redox couples by sun irradiation is achieved in the solar rechargeable redox flow cell 27, while discharging is achieved in the redox flow cell unit 28. Redox flow cell unit 28 comprises a cathode 36 and an anode 37 separated by an ion exchange membrane 38 and connected through an external circuit 39.
While in this example solar rechargeable redox flow cell 27 and redox flow cell unit 28 are directly connected via fluid connection 34 and 35, in some embodiments the charged electrolyte produced in solar rechargeable redox flow cell 27 can be firstly stored in anolyte or catholyte storage tanks (not shown) and subsequently pumped from those tanks into the redox flow cell unit 28. In these embodiments, the anolyte and catholyte tanks may be known tanks to the person skilled in the art and the fluid connections 34 and 35 will not be present, while fluid connections to and from the tanks will be present accordingly.

Example 1

A solar rechargeable redox flow cell equipped with a hematite photoanode was produced. The photoanode was produced by spray pyrolysis on a glass substrate, 2 x 2 $cm^2$, coated with a transparent conduction oxide coat of fluorine doped tin oxide (FTO). A counter-electrode made of a platinum net was inserted in the counter electrode or positive side. Both electrodes were plugged to an electrochemical workstation for measuring the current from the counter-electrode to the photoanode. The cell was separated into two chambers by a Nafion membrane 212 and the photoelectrode or negative chamber was filled with an aqueous solution of sodium bromide (NaBr) 2 M and the counter electrode or positive chamber was filled with an aqueous solution of sodium sulphide ($Na_2S$) 2 M and the pH adjusted to 13 with an aqueous solution of sodium hydroxide 0.1 M. Two small magnetic bars were then inserted in both anode and cathode chambers and the cell placed over a magnetic stirrer. The cell was then placed directly in front of a class a solar simulator, i.e. 1 $kW \cdot m^{-2}$ of irradiance and 1.5 air mass filter (AM).
In the dark no current was recorded between the two electrodes. When the light was turned on, a current of 1 mA was recorded. This current decreased slowly during the cell charging up to 0.5 mA after ca. 30 min. At this moment, the solar simulator was switched off, the photoanode was replaced by a graphite paper electrode (2 x 2 $cm^2$) and the discharging current recorded.

Figure 8 is a flow-chart of a method of operating an electrochemical system according to some embodiments of the invention. The method 40 of operating the electrochemical system comprises:

- light irradiating 41 the photoanode in contact with a solution of sodium bromide;

- reducing 42 a solution of sodium tetrasulphide in contact with the counter electrode;
- switching off 43 the electrical connection between the photoanode and the counter electrode;
- switching on 44 an electrical connection between an anode and a cathode submerged in the solutions, thereby producing electricity.

This step of switching off 43 the electrical connection between said photoelectrode and said counter electrode is not necessary. Electricity may be withdrawn from the battery while the photoelectrode is still on. This arrangement will have the advantage of keeping charging the battery without compromising the discharging of the battery.

Example 2

Presently, the most common redox couples used in redox flow batteries are vanadium species, due to their high chemical stability and energy density.
Figure 9 represents the vanadium redox couples' energy levels, together with two semiconductors - CdS and CdSe. As shown in figure 9, CdS and CdSe band gaps are represented showing good band energy levels to perform the necessary reduction/oxidation reactions.
These semiconductors were synthetized by electrodeposition. CdS films were electrodeposited using a 2 mM CdS aqueous solution in 100 mM $Na_2S_2O_3$. The pH was adjusted to 2.5 using $H_2SO_4$. The thin films were deposited in a stirred plating bath, kept at 40 °C, using a potentiostat in a three-electrode configuration cell at a constant potential of -0.8 V vs. Ag/AgCl reference electrode (potentiostatic mode) for 60 min. A Pt counter electrode was used. The CdSe were electrodeposited using the same setup as for CdS, with a 2 mM $SeO_2$ aqueous solution in 20 mM $CdSO_4$. The pH was adjusted to 2 using $H_2SO_4$. The thin films were deposited in a stirred plating bath, kept at 30 °C at a constant current of -1 mA/cm$^2$ (galvanostatic mode) for 5 min. Given the energy levels of the conduction and valence band these materials form a junction improving the photoelectrochemical performance.
The equations for the solar charged all vanadium redox flow battery, described in this example, are described the below:

$$V^{3+} + e \rightleftharpoons V^{2+} \qquad (7)$$

$$VO^{2+} + 2H^{+} + e \rightleftharpoons V^{3+} + H_2O \qquad (8)$$

with reduction potentials of -0.255 V and 0.337 V, respectively. This battery comprises an open-circuit potential of 0.562 V.
Figure 10 shows the performance of the synthetized photoanodes during the charge of this vanadium redox flow battery. Unassisted solar charge can be observed with 1.7 mA/cm$^2$ current density. An onset at -1 V indicates that this material has enough bias to charge the battery completely, according to the nernst equation for this redox pair. Stable current over 180 s was achieved. Protective layers could be employed to further protect the photoanode from corrosion, such as $TiO_2$, or $SnO_2$ layers.
Charging at different states of charge (SOC) of the battery was tested to prove the possibility of completely charging the battery. Using graphite felt electrodes the battery was charged to different SOC values, defined by the open circuit potential according to nernst equilibrium potential. Then, the anode was replaced by the photoanode and illuminated to produce photo-induced current.
Figure 11 represents the current-voltage characteristics at different SOC values, indicating that the battery can be unassisted solar charged up to 90 % of SOC. Also, the onset increase correlates as expected with the nernst potential. Charging of the battery was confirmed using spectrophotometer measurements of the electrolyte as shown in figure 12. Vanadium oxidation states have very characteristic absorption responses enabling an accurate determination of the different ion species concentrations in solution at any given time. Absorption spectra were taken at different charging times indicating an increase in $VO^{2+}$ and decrease in $V^{3+}$ species, confirming the charge of the battery. Using lambert beer law, the exact concentration can be determined and, knowing the number of photoelectrons provided by the semiconductor, a charging efficiency of 70 % was determined. This value was cross-verified by estimating the photocorrosion using only the supporting electrolyte (0.2 M $H_2SO_4$) to perform a stability measurement.

Example 3

An organic redox couple was tested in combination with the iodide/iodine couple. In this embodiment, 9,10-anthraquinone-2,7- disulphonic acid was used as anolyte together with iodine as catholyte. The pH was adjusted to 11 and hematite was used as a photoanode for cost- and stability reasons. The hematite was synthetized by spray pyrolysis

on a transparent conducting glass (TCO) using a tetraethyl orthosilicate layer for better nucleation and $Fe(ACAC)_3$ to deposit hematite at 450 °C. The relevant electrochemical reactions here are:

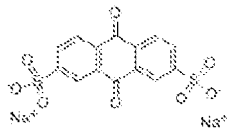 $+ H_2O + 2e \rightleftharpoons 2OH^- +$ 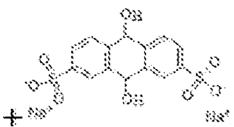 (9)

$$2I^- \rightleftharpoons I_2 + 2e \quad (10)$$

with reduction potentials of -0.3 V and 0.56 V, at pH 11, respectively. This battery comprises an open-circuit potential of 0.86 V.
Figure 13 shows a schematic representation of this embodiment together with the energy levels of the semiconductor and redox pairs. Hematite has a satisfactory band alignment with the necessary energy levels of the redox couple as well as it possesses excellent stability in basic aqueous environments.
The photoresponse of the hematite photoanode is represented in Figure 14. At a bias of 0.7 V a photocurrent of 0.2 mA/cm2 was observed and it remains stable for 10 minutes.
The photoresponse of the hematite photoanode is represented in Figure 14. At a bias of 0.7 V a photocurrent of 0.2 $mA/cm^2$ was observed and it remains stable for 10 minutes. Charging of the battery was confirmed by spectrophotometer measurements (not shown) were the anolyte absorbance spectra was taken after 10 minutes of charging.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A solar rechargeable redox flow cell (5, 8, 17, 27) comprising:

   - a photoelectrode (1, 11, 18, 29);
   - a counter electrode, wherein said counter electrode is electrically connected to said photoelectrode (2, 12, 20, 30);
   - an ion exchange membrane (3, 14, 23, 33) located between said photoelectrode and said counter electrode, thereby separating the solar rechargeable redox flow cell at least into two chambers, a photoelectrode or negative chamber (6, 9, 19, 31) and a counter electrode or positive chamber (7, 10, 21,32) separated by said ion exchange membrane;
   - an electrolyte comprising a first redox couple having a first reduction potential and a second redox couple having a second oxidation potential;
   - wherein said photoelectrode has a conduction band potential lower than said first reduction potential, and wherein said photoelectrode has a valence band potential higher than said second oxidation potential.

2. A solar rechargeable redox flow cell according to claim 1, wherein said first redox couple is contained in said counter electrode or positive chamber and wherein said second redox couple is contained in said photoelectrode or negative chamber.

3. A solar rechargeable redox flow cell according to any of the preceding claims wherein said electrolyte comprises a first salt solution comprising said first redox couple in said counter electrode or positive chamber and wherein said liquid electrolyte comprises a second salt solution comprising said second redox couple in said photoelectrode or negative chamber.

4. A solar rechargeable redox flow cell according to any of the preceding claims wherein said first redox couple is $S_4^{2-}/S_2^{2-}$ and wherein said second redox couple is $Br^-/Br_3^-$.

5. A solar rechargeable redox flow cell according to any of the preceding claims 1 to 3, wherein said first redox couple is $I^-/I_3^-$, and wherein said second redox couple is DHAQDS/$DHAQDSH_2$.

6. A solar rechargeable redox flow cell according to any of the preceding claims 1 to 3, wherein said first redox couple is $VO^{2+}/V^{3+}$, and wherein said second redox couple is $V^{3+}/V^{2+}$.

7. A solar rechargeable redox flow cell according to any of the preceding claims wherein said ion-exchange membrane is a cation exchange membrane.

8. A solar rechargeable redox flow cell according to any of the preceding claims 1 to 4 wherein said photoelectrode comprises iron (III) oxide, such as hematite.

9. A solar rechargeable redox flow cell according to any of the preceding claims 1 to 3 and 6, wherein said photoelectrode comprises CdS.

10. A solar rechargeable redox flow cell according to any of the preceding claims 1 to 3, 6 and 9, wherein said photoelectrode comprises CdSe.

11. A solar rechargeable redox flow cell according to any of the preceding claims wherein said photoelectrode comprises a co-catalyst.

12. A solar rechargeable redox flow cell according to any of the preceding claims wherein said counter electrode is or comprises a second photoelectrode, such as Cu2S.

13. A method for storing solar energy by chemicals conversion through a solar rechargeable redox flow cell according to any of the preceding claims 1 to 4, 7 and 8, said method comprising:

- light irradiating said photoelectrode in contact with a solution of sodium bromide, thereby producing a charge separation causing oxidation of bromide to tribromide;
- reducing a solution of sodium tetrasulphide in contact with said counter electrode, thereby causing reduction of tetrasulphide to disulphide.

14. An electrochemical system comprising a solar rechargeable redox flow cell according to any of the preceding claims 1-12.

15. A method of operating an electrochemical system according to claim 14, the method comprising:

- charging said solar rechargeable redox flow cell;
- discharging said solar rechargeable redox flow cell, thereby producing electricity.

## Patentansprüche

1. Wiederaufladbare Solar-Redox-Flusszelle (5, 8, 17, 27), umfassend:

- eine Fotoelektrode (1, 11, 18, 29);
- eine Gegenelektrode, wobei die Gegenelektrode elektrisch mit der Fotoelektrode verbunden ist (2, 12, 20, 30);
- eine Ionenaustauschmembran (3, 14, 23, 33), die sich zwischen der Fotoelektrode und der Gegenelektrode befindet, wodurch die wiederaufladbare Solar-Redox-Flusszelle zumindest in zwei Kammern, eine Fotoelektroden- oder Negativkammer (6, 9, 19, 31) und eine Gegenelektroden- oder Positivkammer (7, 10, 21, 32), die durch die Ionenaustauschmembran geteilt sind, geteilt wird;
- einen Elektrolyt umfassend ein erstes Redoxpaar mit einem ersten Reduktionspotential und ein zweites Redoxpaar mit einem zweiten Oxidationspotential;
- wobei die Fotoelektrode ein Leitungsbandpotential hat, das niedriger als das erste Reduktionspotential ist, und wobei die Fotoelektrode ein Valenzbandpotential hat, das höher als das zweite Oxidationspotential ist.

2. Wiederaufladbare Solar-Redox-Flusszelle nach Anspruch 1, wobei das erste Redoxpaar in der Gegenelektroden- oder Positivkammer enthalten ist und wobei das zweite Redoxpaar in der Fotoelektroden- oder Negativkammer enthalten ist.

3. Wiederaufladbare Solar-Redox-Flusszelle nach einem der vorstehenden Ansprüche, wobei der Elektrolyt eine erste Salzlösung umfassend das erste Redoxpaar in der Gegenelektroden- oder Positivkammer umfasst und wobei der flüssige Elektrolyt eine zweite Salzlösung umfassend das zweite Redoxpaar in der Fotoelektroden- oder Negativkammer umfasst.

4. Wiederaufladbare Solar-Redox-Flusszelle nach einem der vorstehenden Ansprüche, wobei das erste Redoxpaar $S_4^{2-}/S_2^{2-}$ ist und wobei das zweite Redoxpaar $Br^-/Br_3^-$ ist.

5. Wiederaufladbare Solar-Redox-Flusszelle nach einem der vorstehenden Ansprüche 1 bis 3, wobei das erste Redoxpaar $I^-/I_3^-$ ist und wobei das zweite Redoxpaar DHAQDS/$DHAQDSH_2$ ist.

6. Wiederaufladbare Solar-Redox-Flusszelle nach einem der vorstehenden Ansprüche 1 bis 3, wobei das erste Redoxpaar $VO^{2+}/V^{3+}$ ist und wobei das zweite Redoxpaar $V^{3+}/V^{2+}$ ist.

7. Wiederaufladbare Solar-Redox-Flusszelle nach einem der vorstehenden Ansprüche, wobei die Ionenaustauschmembran eine Kationenaustauschmembran ist.

8. Wiederaufladbare Solar-Redox-Flusszelle nach einem der vorstehenden Ansprüche 1 bis 4, wobei die Fotoelektrode Eisen(III)-oxid, wie etwa Hämatit, umfasst.

9. Wiederaufladbare Solar-Redox-Flusszelle nach einem der vorstehenden Ansprüche 1 bis 3 und 6, wobei die Fotoelektrode CdS umfasst.

10. Wiederaufladbare Solar-Redox-Flusszelle nach einem der vorstehenden Ansprüche 1 bis 3, 6 und 9, wobei die Fotoelektrode CdSe umfasst.

11. Wiederaufladbare Solar-Redox-Flusszelle nach einem der vorstehenden Ansprüche, wobei die Fotoelektrode einen Co-Katalysator umfasst.

12. Wiederaufladbare Solar-Redox-Flusszelle nach einem der vorstehenden Ansprüche, wobei die Gegenelektrode eine zweite Fotoelektrode, wie etwa $Cu_2S$, ist oder umfasst.

13. Verfahren zum Speichern von Solarenergie mittels Chemikalienumwandlung durch eine wiederaufladbare Solar-Redox-Flusszelle nach einem der vorstehenden Ansprüche 1 bis 4, 7 und 8, wobei das Verfahren Folgendes umfasst:

   - Lichtbestrahlung der Fotoelektrode in Kontakt mit einer Lösung von Natriumbromid, wodurch eine Ladungstrennung erzeugt wird, die eine Oxidation von Bromid zu Tribromid hervorruft;
   - Reduzieren einer Lösung von Natriumtetrasulphid in Kontakt mit der Gegenelektrode, wodurch Reduktion von Tetrasulphid zu Disulphid hervorgerufen wird.

14. Elektrochemisches System umfassend eine wiederaufladbare Solar-Redox-Flusszelle nach einem der vorstehenden Ansprüche 1-12.

15. Verfahren zum Betreiben eines elektrochemischen Systems nach Anspruch 14, wobei das Verfahren Folgendes umfasst:

   - Laden der wiederaufladbaren Solar-Redox-Flusszelle;
   - Entladen der wiederaufladbaren Solar-Redox-Flusszelle, wodurch Elektrizität erzeugt wird.

## Revendications

1. Cuve de circulation d'oxydoréduction rechargeable solaire (5, 8, 17, 27) comprenant :

- une photo-électrode (1, 11, 18, 29) ;
- une contre-électrode, ladite contre-électrode étant reliée électriquement à ladite photo-électrode (2, 12, 20, 30) ;
- une membrane échangeuse d'ions (3, 14, 23, 33) située entre ladite photo-électrode et ladite contre-électrode, séparant ainsi la cuve de circulation d'oxydoréduction rechargeable solaire au moins en deux chambres, une photo-électrode ou chambre négative (6, 9, 19, 31) et une contre-électrode ou chambre positive (7, 10, 21, 32), séparées par ladite membrane échangeuse d'ions ;
- un électrolyte comprenant un premier couple oxydant-réducteur possédant un premier potentiel de réduction et un second couple oxydant-réducteur possédant un second potentiel d'oxydation ;
- ladite photo-électrode possédant un potentiel de bande de conduction inférieur audit premier potentiel de réduction, et ladite photo-électrode possédant un potentiel de bande de valence supérieur audit second potentiel d'oxydation.

**2.** Cuve de circulation d'oxydoréduction rechargeable solaire selon la revendication 1, ledit premier couple oxydant-réducteur étant contenu dans ladite contre-électrode ou chambre positive et ledit second couple oxydant-réducteur étant contenu dans ladite photo-électrode ou chambre négative.

**3.** Cuve de circulation d'oxydoréduction rechargeable solaire selon l'une quelconque des revendications précédentes, ledit électrolyte comprenant une première solution saline comprenant ledit premier couple oxydant-réducteur dans ladite contre-électrode ou chambre positive et ledit électrolyte liquide comprenant une seconde solution saline comprenant ledit second couple oxydant-réducteur dans ladite photo-électrode ou chambre négative.

**4.** Cuve de circulation d'oxydoréduction rechargeable solaire selon l'une quelconque des revendications précédentes, ledit premier couple oxydant-réducteur étant $S_4^{2-}/S_2^{2-}$ et ledit second couple oxydant-réducteur étant $Br^-/Br_3^-$.

**5.** Cuve de circulation d'oxydoréduction rechargeable solaire selon l'une quelconque des revendications précédentes 1 à 3, ledit premier couple oxydant-réducteur étant $I^-/I_3^-$, et ledit second couple oxydant-réducteur étant DHA-QDS/$DHAQDSH_2$.

**6.** Cuve de circulation d'oxydoréduction rechargeable solaire selon l'une quelconque des revendications précédentes 1 à 3, ledit premier couple oxydant-réducteur étant $VO^{2+}/V^{3+}$, et ledit second couple oxydant-réducteur étant $V^{3+}/V^{2+}$.

**7.** Cuve de circulation d'oxydoréduction rechargeable solaire selon l'une quelconque des revendications précédentes, ladite membrane échangeuse d'ions étant une membrane échangeuse de cations.

**8.** Cuve de circulation d'oxydoréduction rechargeable solaire selon l'une quelconque des revendications précédentes 1 à 4, ladite photo-électrode comprenant un oxyde de fer (III) tel que l'hématite.

**9.** Cuve de circulation d'oxydoréduction rechargeable solaire selon l'une quelconque des revendications précédentes 1 à 3 et 6, ladite photo-électrode comprenant du CdS.

**10.** Cuve de circulation d'oxydoréduction rechargeable solaire selon l'une quelconque des revendications précédentes 1 à 3, 6 et 9, ladite photo-électrode comprenant du CdSe.

**11.** Cuve de circulation d'oxydoréduction rechargeable solaire selon l'une quelconque des revendications précédentes, ladite photo-électrode comprenant un co-catalyseur.

**12.** Cuve de circulation d'oxydoréduction rechargeable solaire selon l'une quelconque des revendications précédentes, ladite contre-électrode étant ou comprenant une seconde photo-électrode tel que du $Cu_2S$.

**13.** Procédé pour stocker de l'énergie solaire par conversion de produits chimiques grâce à une cuve de circulation d'oxydoréduction rechargeable solaire selon l'une quelconque des revendications précédentes 1 à 4, 7 et 8, ledit procédé comprenant :

- l'irradiation par une lumière de ladite photo-électrode en contact avec une solution de bromure de sodium, produisant ainsi une séparation de charge provoquant l'oxydation du bromure en tribromure ;
- la réduction d'une solution de tétrasulfure de sodium en contact avec ladite contre-électrode, provoquant ainsi la réduction du tétrasulfure en disulfure.

**14.** Système électrochimique comprenant une cuve de circulation d'oxydoréduction rechargeable solaire selon l'une quelconque des revendications précédentes 1 à 12.

**15.** Procédé de fonctionnement d'un système électrochimique selon la revendication 14, ledit procédé comprenant :

- le chargement de ladite cuve de circulation d'oxydoréduction rechargeable solaire ;
- la décharge de ladite cuve de circulation d'oxydoréduction rechargeable solaire ce qui permet la production d'électricité.

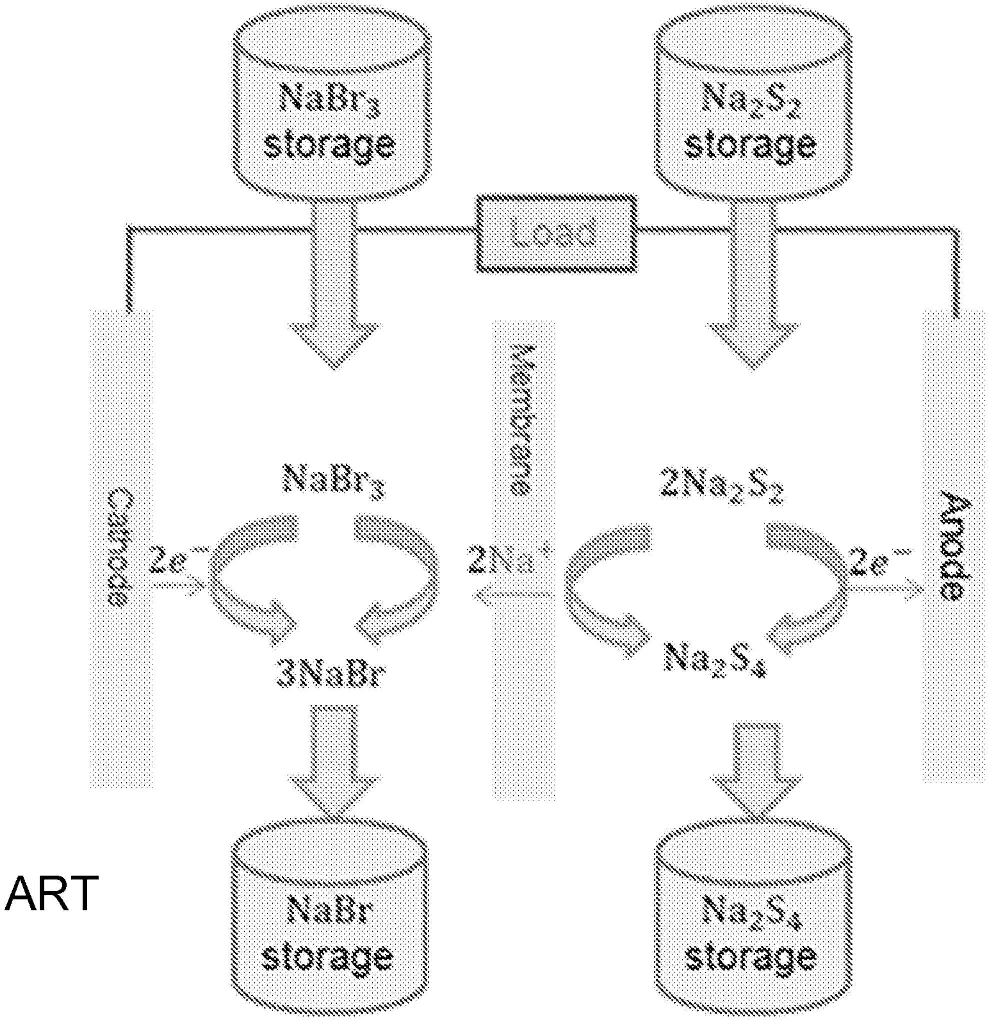


PRIOR ART

FIG. 1

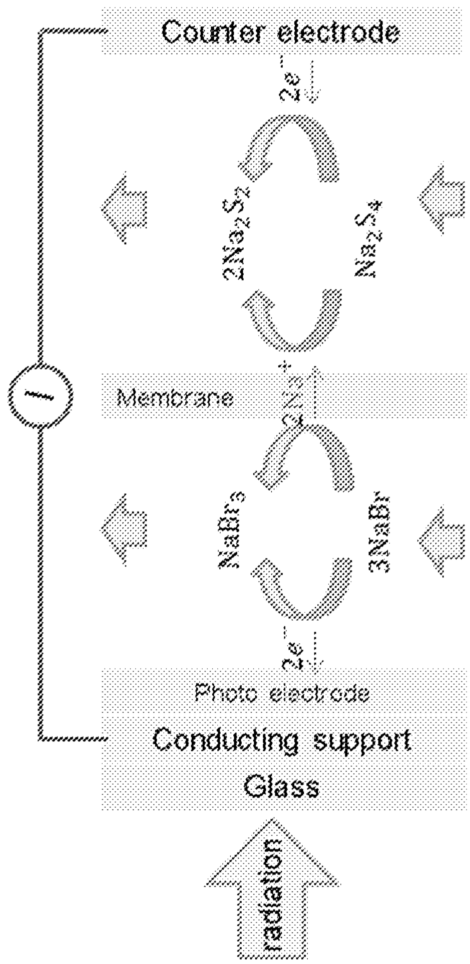
Counter electrode
$2e^-$
$2Na_2S_2$
$Na_2S_4$
Membrane
$2Na^+$
$NaBr_3$
3NaBr
$2e^-$
Photo electrode
Conducting support
Glass
radiation
I

FIG. 2a

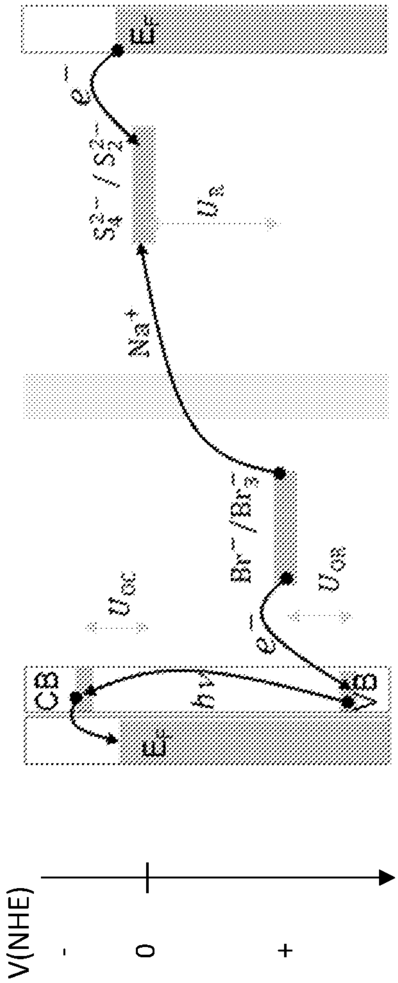
V(NHE)
-
0
+
CB
VB
$h\nu$
$E_F$
$e^-$
$Br^-/Br_3^-$
$U_{OR}$
$U_{OC}$
$Na^+$
$S_4^{2-} / S_2^{2-}$
$U_R$
$e^-$
$E_F$

FIG. 2b

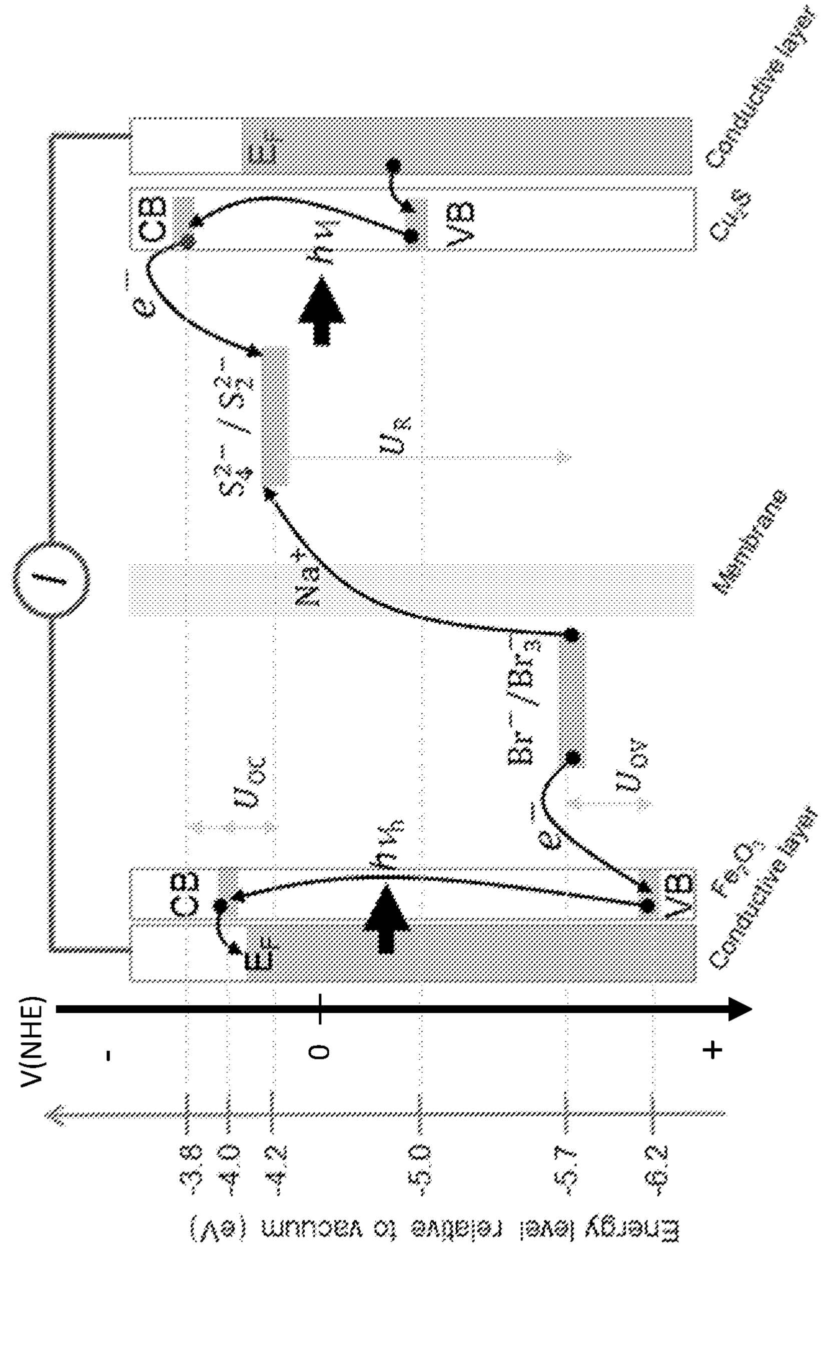

Energy level relative to vacuum (eV)
-3.8
-4.0
-4.2
-5.0
-5.7
-6.2
V(NHE)
-
0
+
Conductive layer
$Fe_2O_3$
CB
VB
$E_F$
$U_{oc}$
$U_{ov}$
$Br^-/Br_3^-$
Membrane
$Na^+$
$S_4^{2-}/S_2^{2-}$
$U_s$
$Cu_2S$
Conductive layer
I


FIG. 3

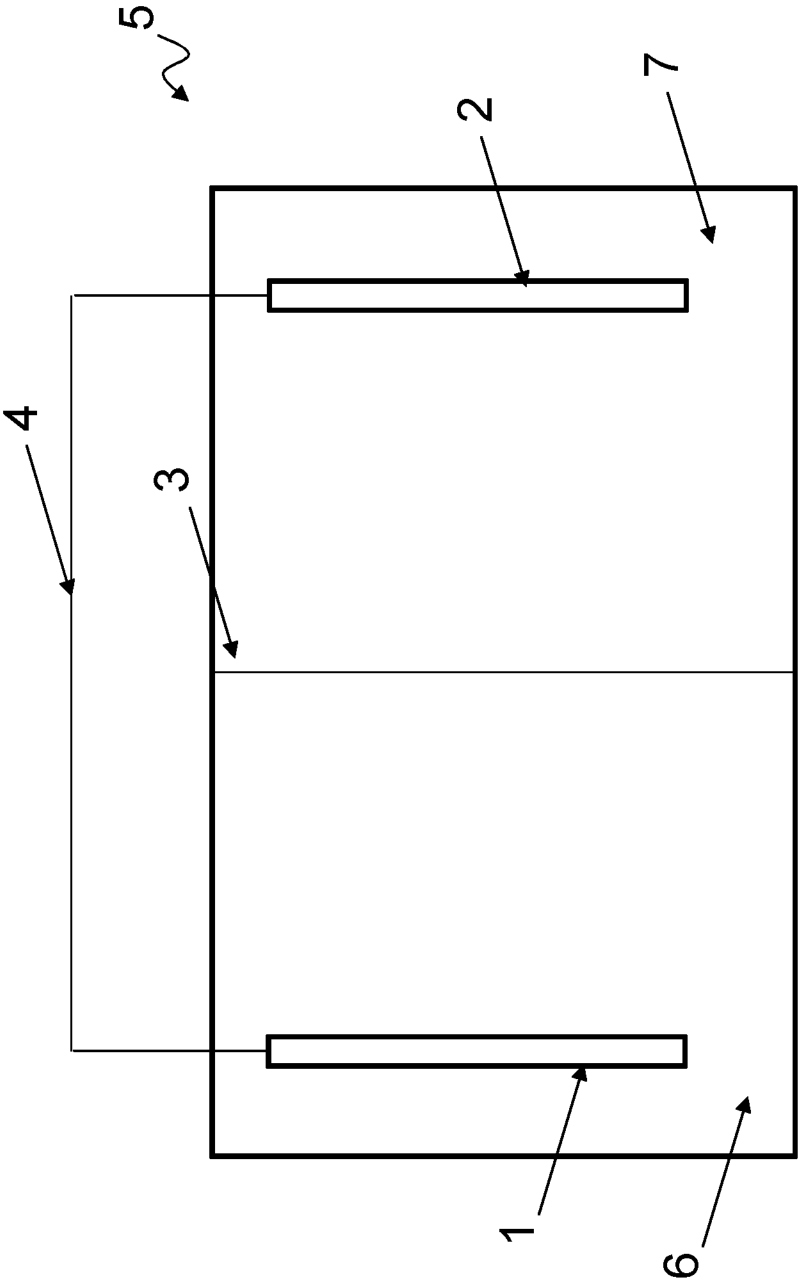


FIG. 4

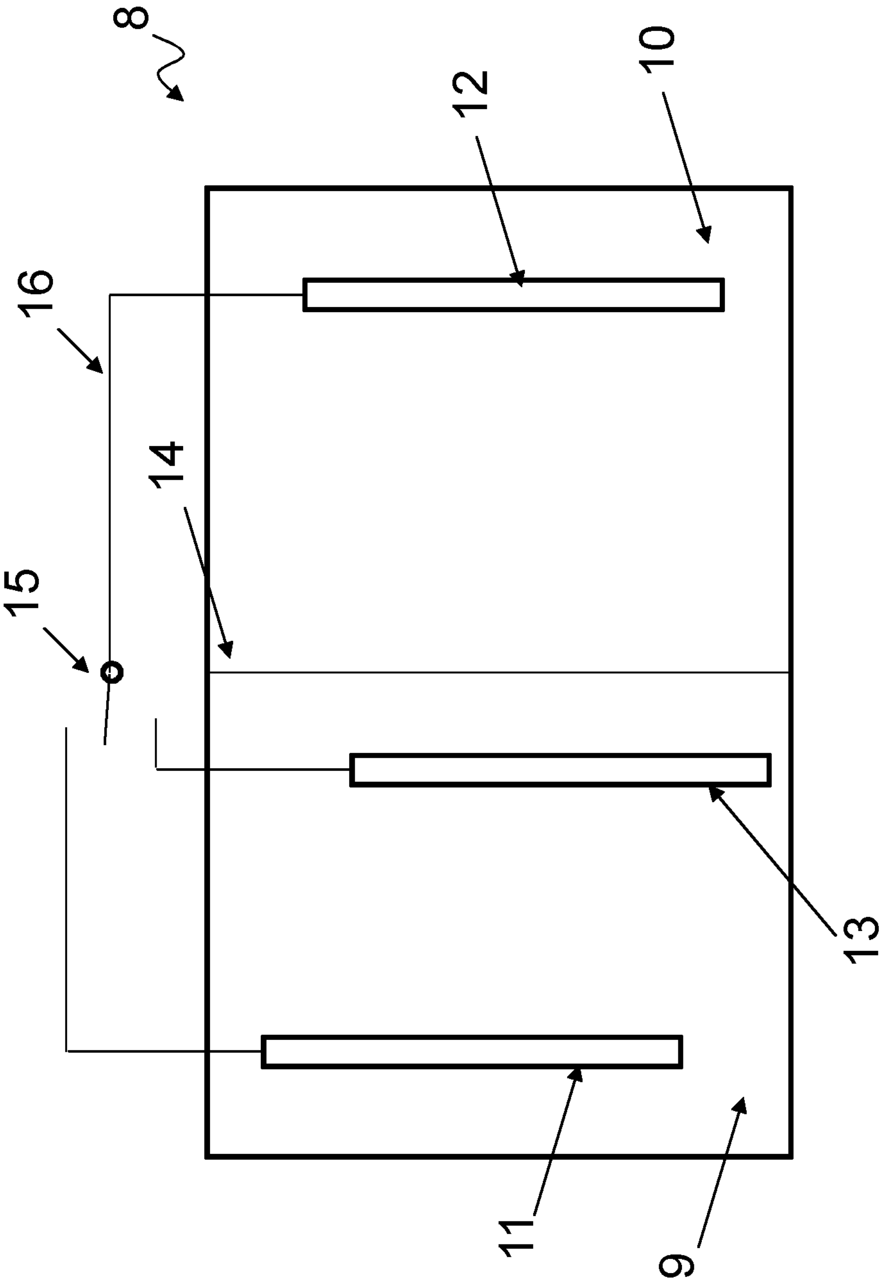


FIG. 5

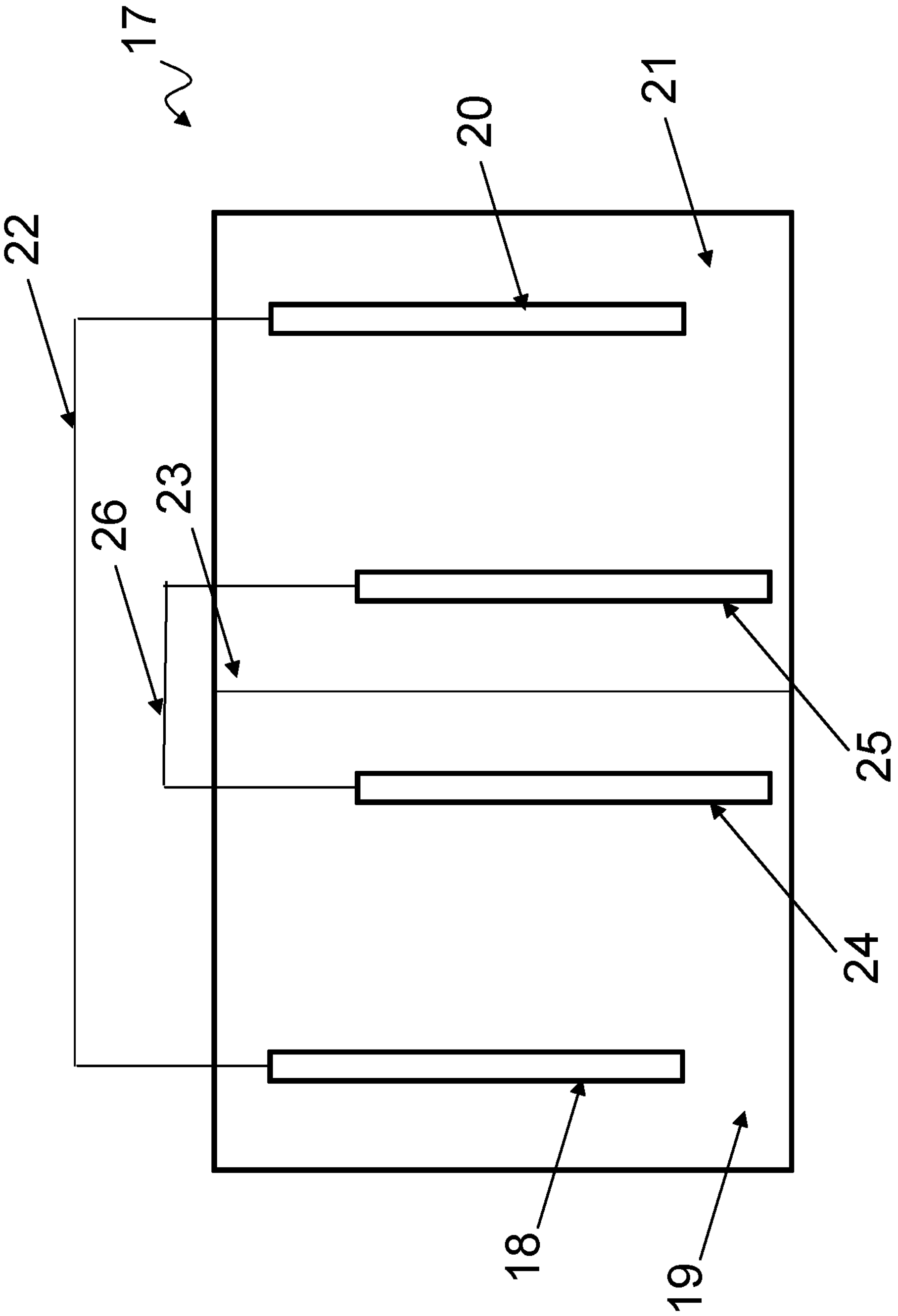


FIG. 6

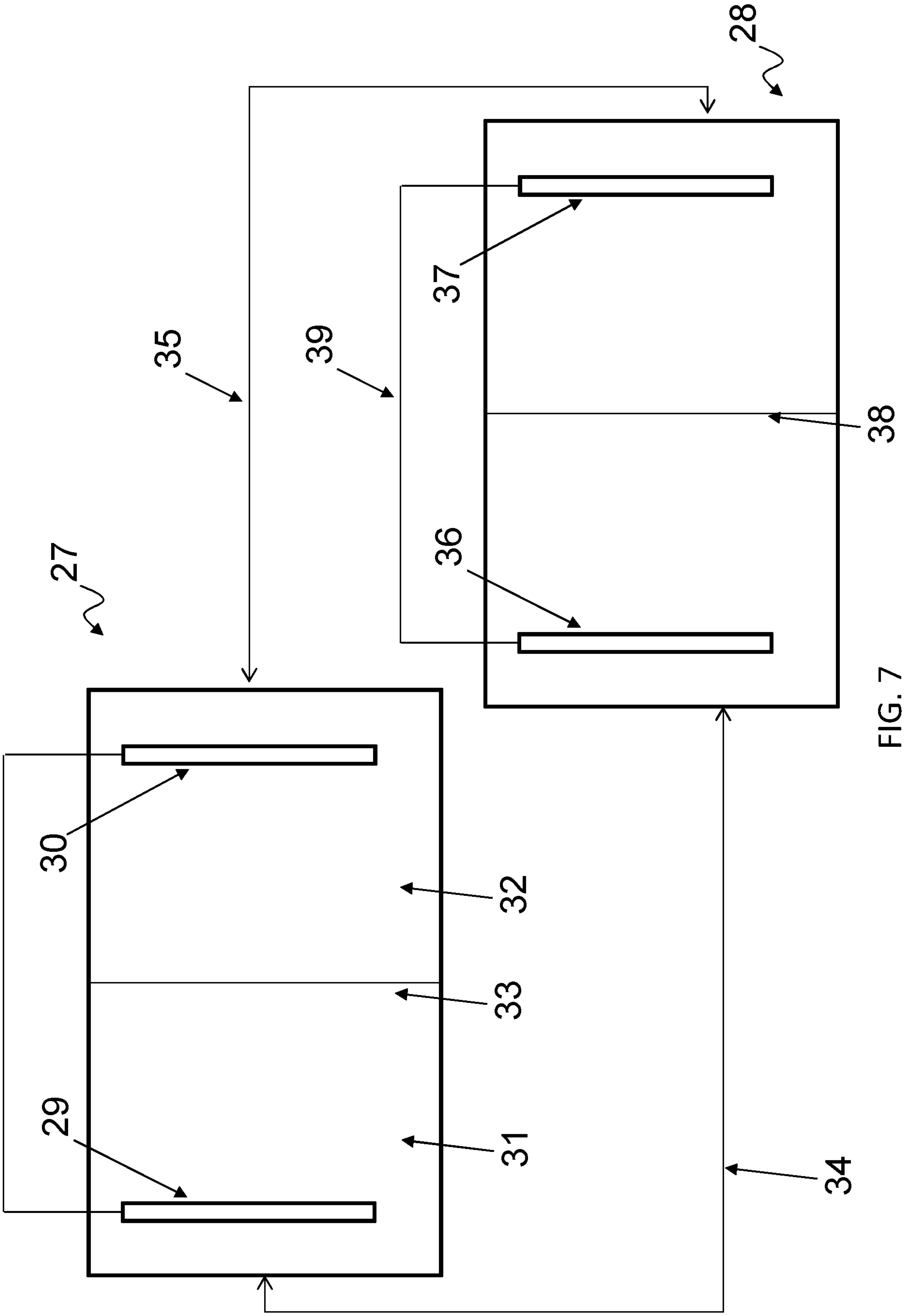


FIG. 7

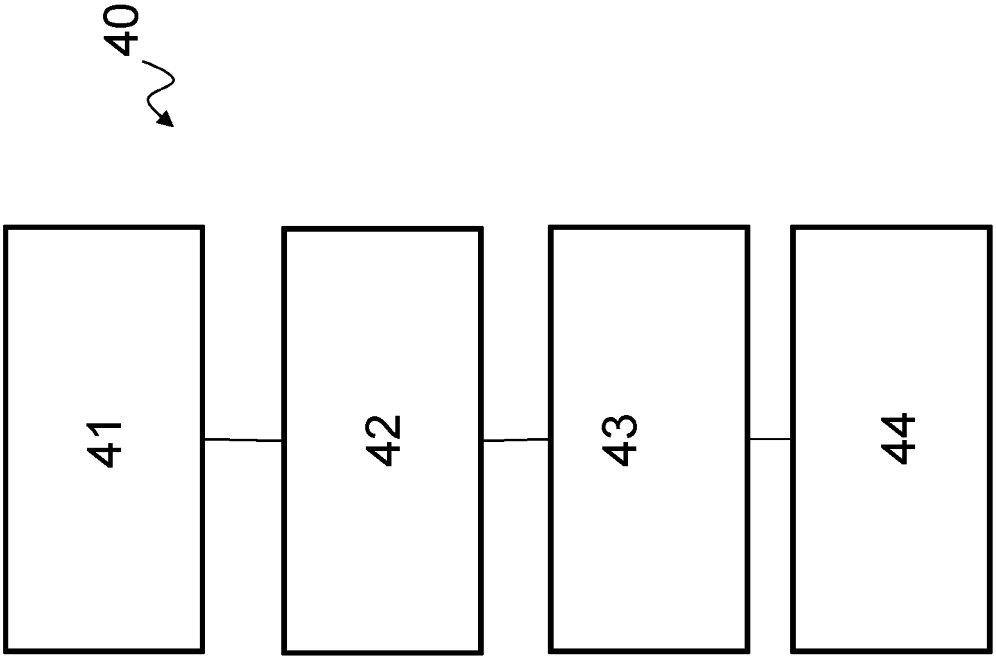


FIG. 8

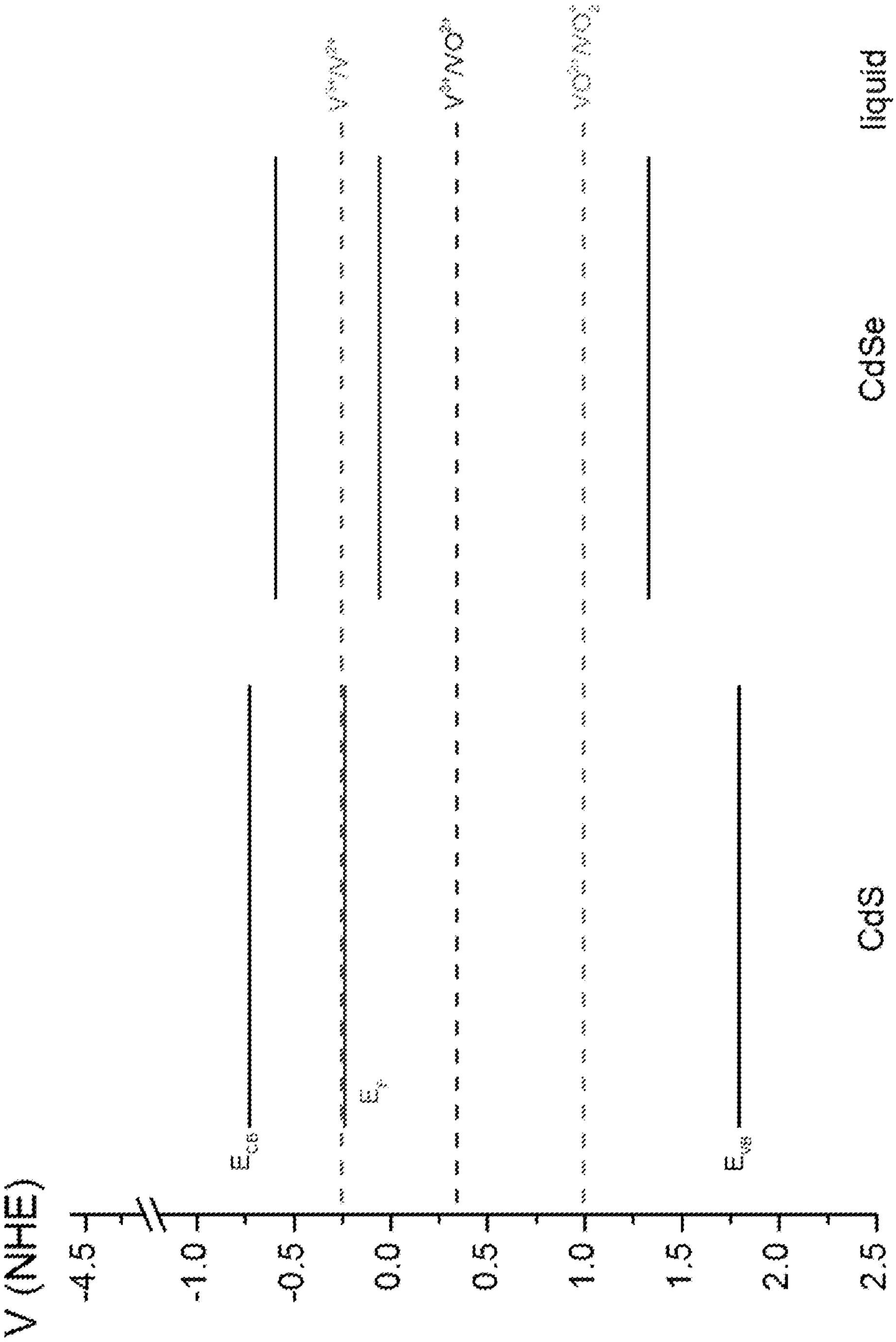


FIG. 9

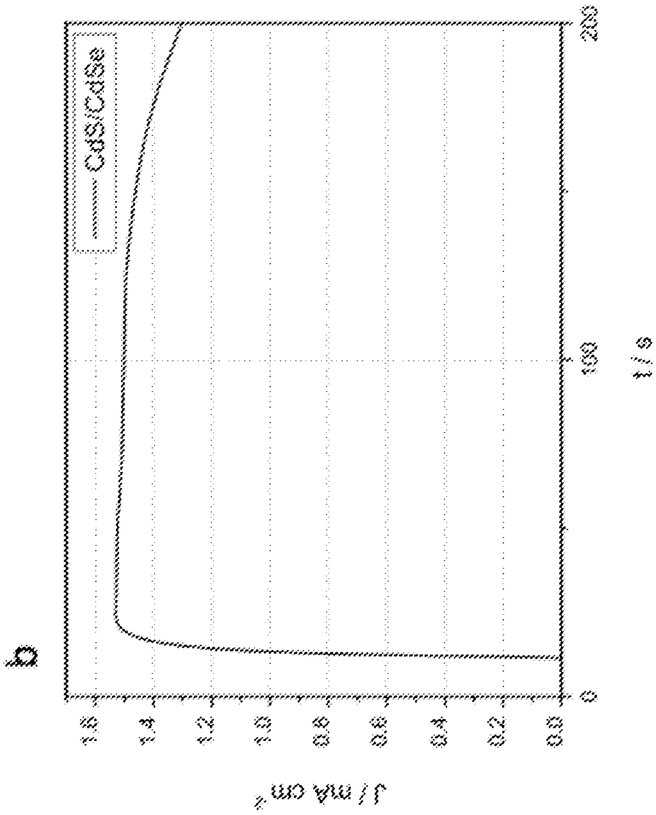


FIG. 10b

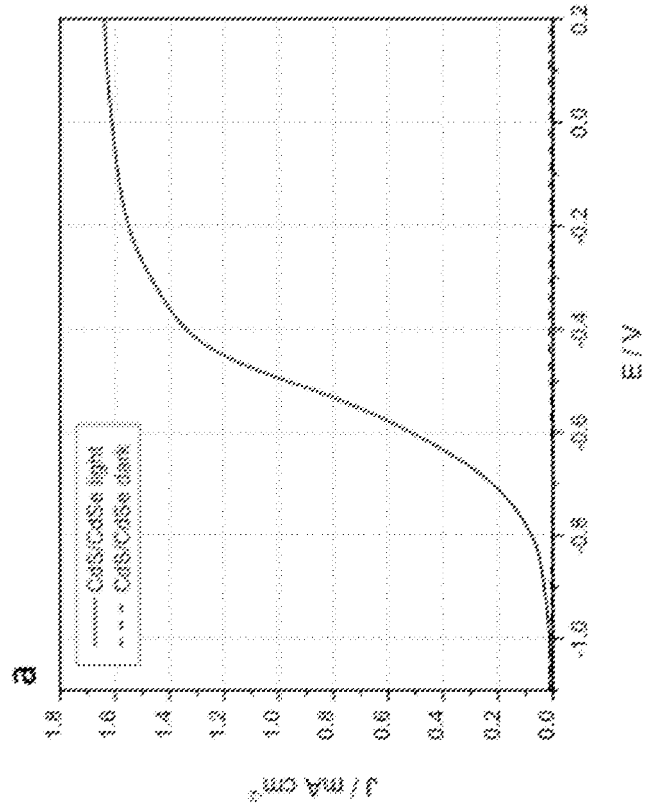


FIG. 10a

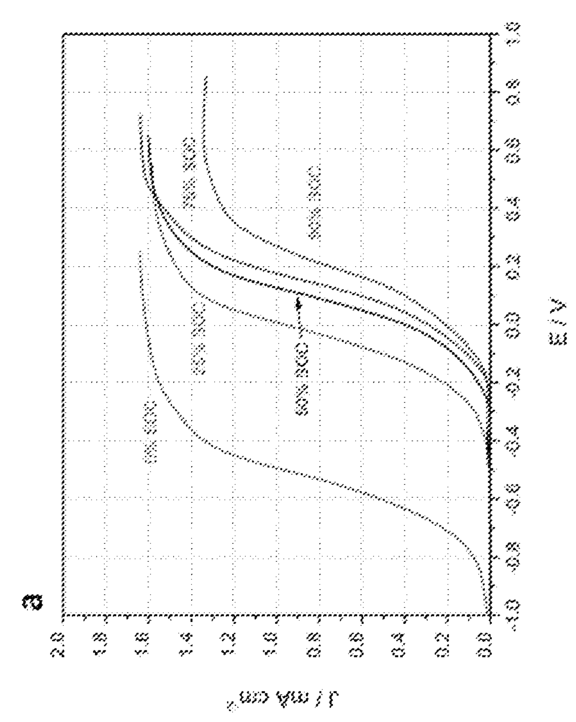

FIG. 11a

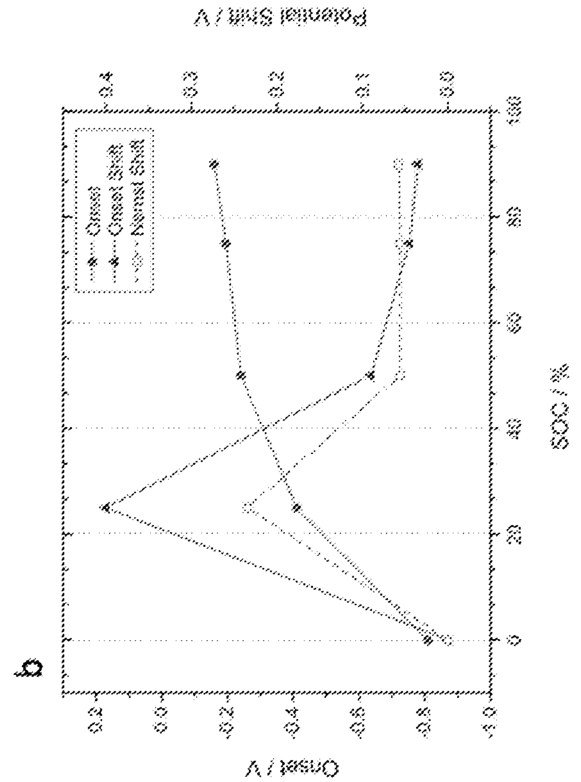

FIG. 11b

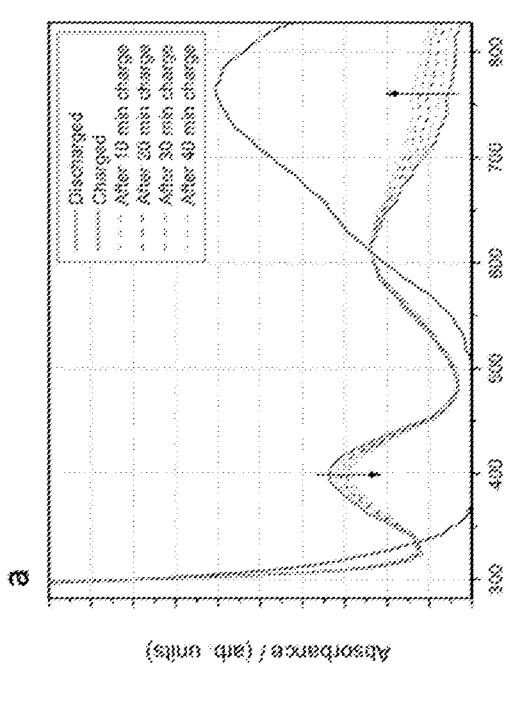

FIG. 12a

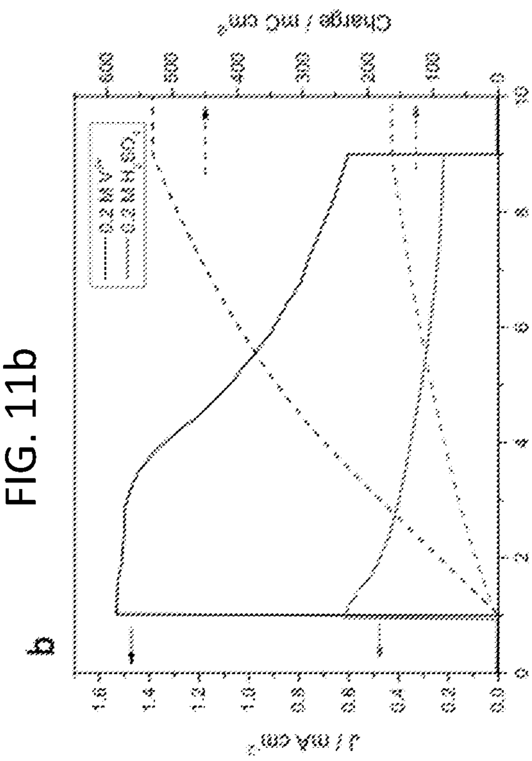

FIG. 12b

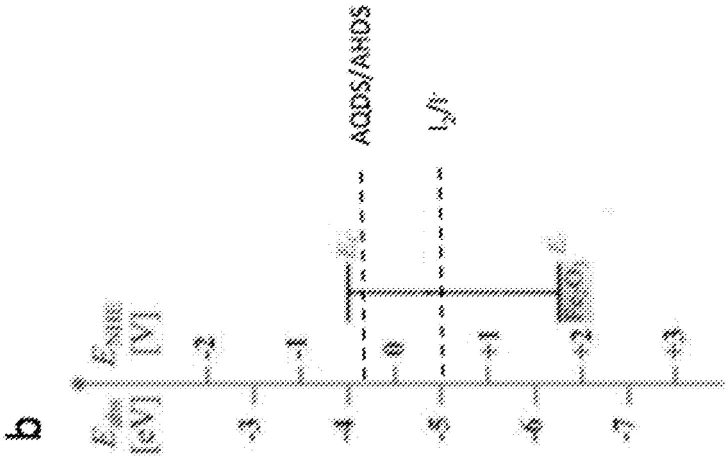


FIG. 13b

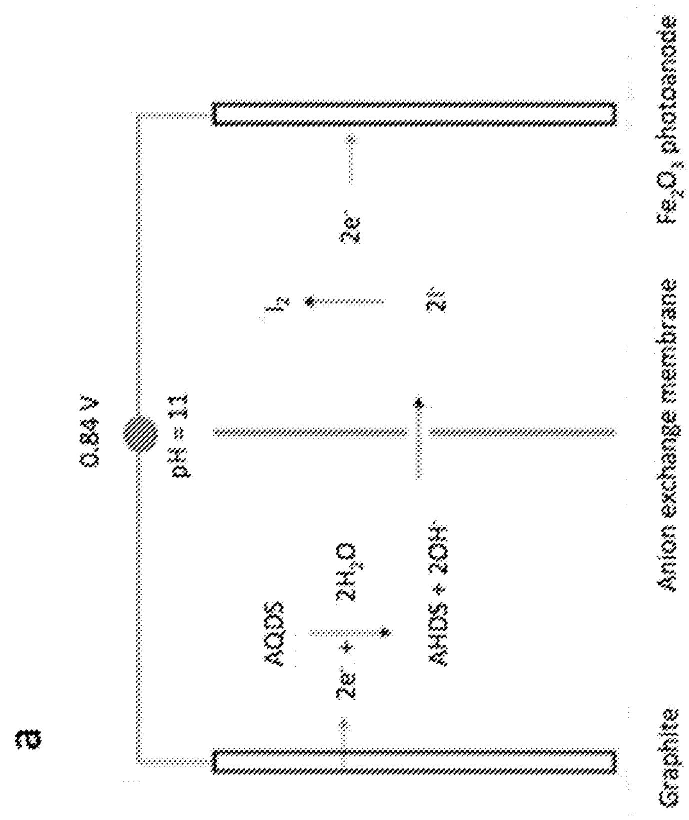


FIG. 13a

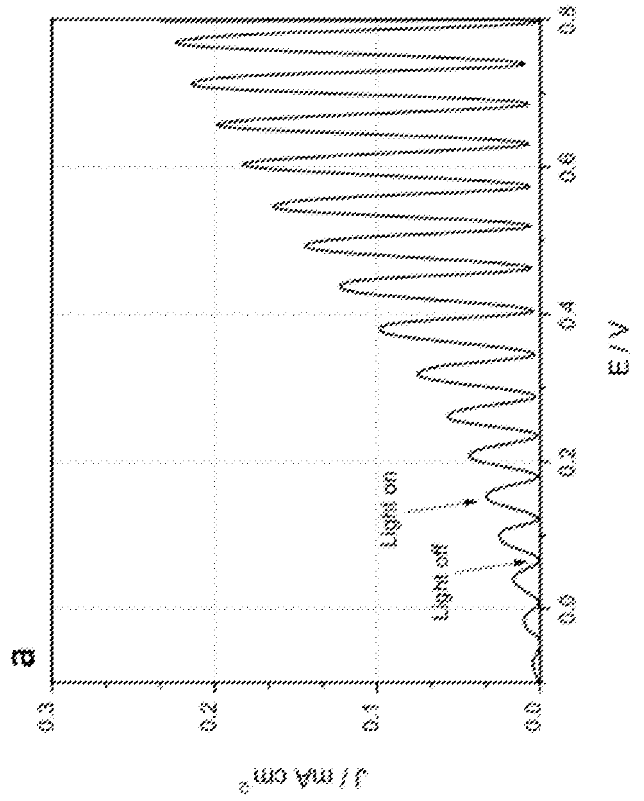


FIG. 14a

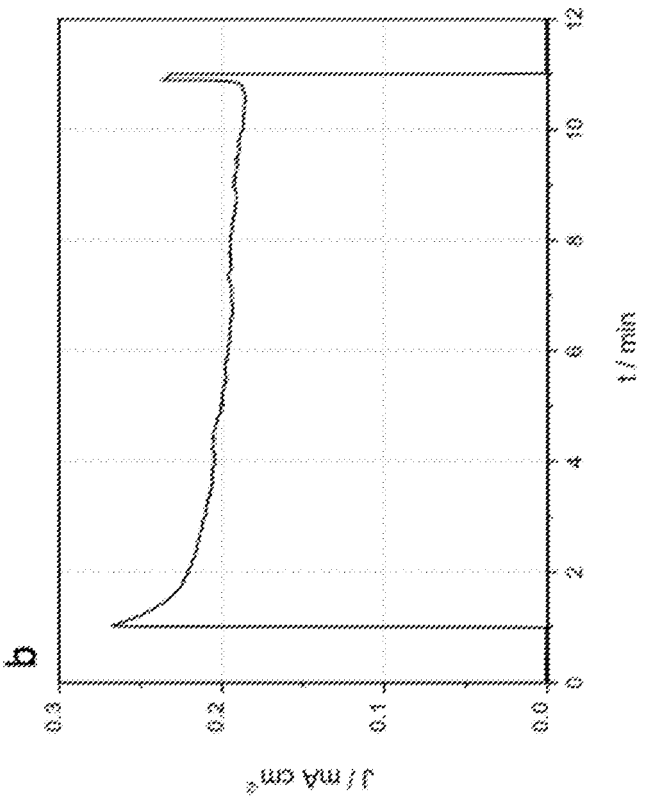


FIG. 14b